# EUROPÄISCHE PATENTANMELDUNG

(11) **EP 0 526 746 A2**
(43) Veröffentlichungstag der Anmeldung: **10.02.1993**
(21) Anmeldenummer: 92111530.9
(22) Anmeldetag: 08.07.1992
(51) Int. Cl.: G09F 13/18

(54) **Kundenführungsanlage für Selbstbedienungsgeschäfte, Baumärkte, Bahnhöfe, Flughäfen und dergleichen**

(30) Priorität: 24.07.1991 DE 4124567
(71) Anmelder: Brüder Siegel GmbH + Co. KG Draht- und Metallwarenfabrik, D-89336 Leipheim (DE)
(72) Erfinder: Molodczak, Walter, A-1140 Wien (AT); Siegel, Franz, W-8874 Leipheim (DE)
(74) Vertreter: Dorner, Jörg, Dr.-Ing.

(57) **Zusammenfassung**

Bei einer Kundenführungsanlage für Selbstbedienungsgeschäfte, Baumärkte, Bahnhöfe, Flughäfen oder dergleichen werden für die Kunden deutlich erkennbare und auffällige Beschriftungsflächen und Werbeflächen dadurch geschaffen, daß zwischen Türflügelholmen oder Geländerholmen, welche im allgemeinen als Hohlprofile ausgebildet sind, in Schlitzöffnungen eine als Lichtleiterkörper wirksame Platte aus transparentem Material befestigt wird, welche längs mindestens einer Kante durch eine innerhalb eines Holms befindliche stabförmige elektrische Lichtquelle bestrahlt wird, derart, daß durch innere Totalreflexion in der Platte das Licht zu auf mindestens einer Plattenoberfläche angebrachten lichtstreuenden Bereichen in Gestalt einer Bildinformation oder Beschriftung gelangt.

## Beschreibung

Die Erfindung betrifft eine Kundenführungsanlage für Selbstbedienungsgeschäfte, Baumärkte, Bahnhöfe, Flughäfen und dergleichen, mit von mindestens einer am Boden verankerten Säule im Vertikalabstand voneinander seitlich wegführenden horizontalen Geländer- oder Türflügelholmen.

Bekannte Schwenktüren von Kundenführungsanlagen in Selbstbedienungsgeschäften weisen als Türflügel einen U-förmigen Rohrbügel auf, der an einem drehbaren Teil einer am Boden verankerten Schwenktürsäule befestigt ist, wobei der drehbare Teil der Schwenktüre von einem Motor steuerbar angetrieben ist oder auch gegen Federkraft verschwenkbar sein kann. Zwischen den Horizontalholmen des U-Bügels ist im allgemeinen eine Platte eingesetzt, welche auf ihren beiden Seiten mit einer Beschriftung versehen ist, welche den Kunden signalisiert, ob von der betreffenden Türseite aus ein Durchgang gestattet ist oder nicht.

Weiter ist es bekannt, Kundenführungsanlagen mit Geländerabschnitten zu versehen, wobei zwischen Geländersäulen Horizontalholme im Vertikalabstand voneinander geführt sind. Zwischen die Horizontalholme können Platten gesetzt sein, welche verhindern, daß Kunden zwischen den Horizontalholmen durch das Geländer schlüpfen.

Durch die Erfindung soll die Aufgabe gelöst werden, eine Kundenführungsanlage der eingangs kurz beschriebenen Art so auszugestalten, daß bei vergleichsweise einfachem Aufbau und gefälligem Aussehen Informationsflächen und Werbeflächen mit auffälliger Schrift- oder Bildinformation zur Verfügung stehen.

Diese Aufgabe wird erfindungsgemäß durch die im kennzeichnenden Teil von Patentanspruch 1 angegebenen Merkmale gelöst.

Ein besonderer Vorteil von Kundenführungsanlagen der hier angegebenen Art ist es, daß keine wesentlichen Änderungen an bestehenden Konstruktionen von Kundenführungsanlagen notwendig sind, so daß beispielsweise auch bestehende Anlagen umgerüstet werden können.

Vorteilhafte Ausgestaltungen und Weiterbildungen sind Gegenstand der dem Anspruch 1 nachgeordneten Patentansprüche.

Nachfolgend werden einige Ausführungsbeispiele anhand der Zeichnung beschrieben. Es stellen dar:
Fig. 1 eine schematische perspektivische Ansicht einer Schwenktüre einer Kundenführungsanlage der hier vorgeschlagenen Art,
Fig. 2 eine schematische perspektivische Ansicht eines Geländerabschnittes einer Kundenführungsanlage der hier angegebenen Art,
Fig. 3 eine Schnittansicht entsprechend der in Figur 1 angegebenen Schnittlinie III-III,
Fig. 4a bis 4c in verkleinertem Maßstab Schnittdarstellungen ähnlich derjenigen von Figur 3 von abgewandelten Ausführungsformen einer Schwenktüre und
Fig. 5a bis 5c Teil-Schnittdarstellungen entsprechend dem oberen Teil von Figur 3 von wiederum abgewandelten Ausführungsformen.

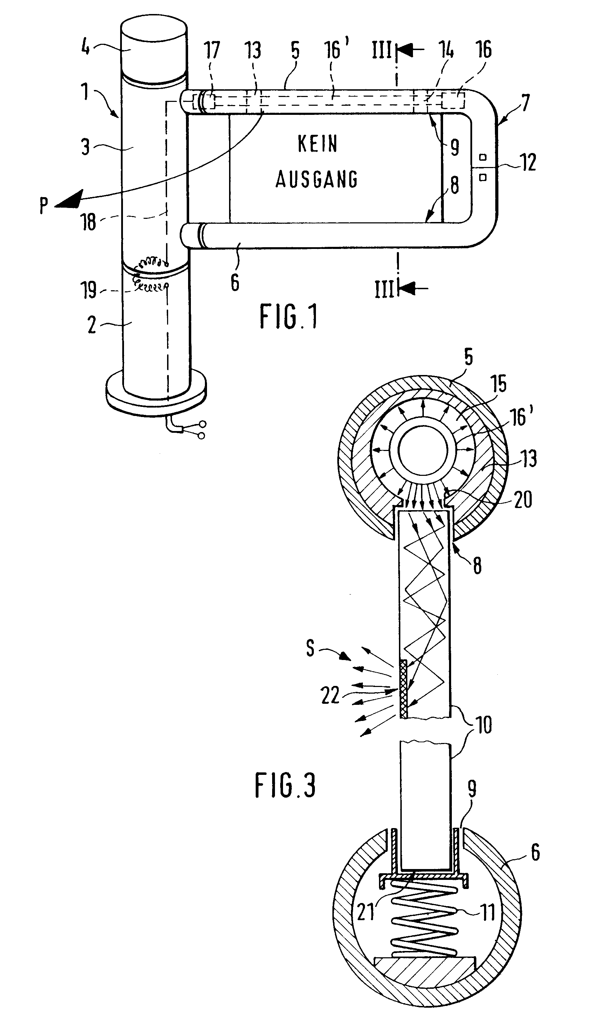

Eine Schwenktüre ist in Figur 1 mit 1 bezeichnet und enthält ein am Boden verankerbares Standrohr 2, über diesem ein um eine Vertikalachse durch einen Motorantrieb oder gegen Federkraft in Richtung des Pfeiles P drehbares Schwenkrohr 3 und über diesem wiederum ein stillstehendes und mit dem Standrohr 2 über eine innerhalb des Schwenkrohres 3 verlaufende Stützkonstruktion verbundenes Kopfteil 4.

An dem Schwenkrohr 3 sind radial ein oberer Türflügelholm 5 und in Vertikalabstand unter diesem ein unterer Türflügelholm 6 befestigt, welche Teil eines U-förmigen Türflügel-Rohrbügels 7 bilden. Der obere und der untere Türflügelholm 5 und 6 sind auf den einander zugekehrten Seiten mit längslaufenden Schlitzöffnungen 8 bzw. 9 versehen, wie im einzelnen auch aus Figur 3 erkennbar ist. In die Schlitzöffnungen 8 und 9 ist eine die Öffnung des Türflügel-Rohrbügels 7 mindestens teilweise erfüllende Acrylglasplatte 10 eingeschwenkt und eingesetzt, wozu die Acrylglasplatte 10 zunächst gegen die Kraft von Federmitteln 11 in die untere Schlitzöffnung 9 eingedrückt und dann in die obere Schlitzöffnungen 8 eingerückt wird.

Die Federmittel 11 sind in Figur 3 nur rein schematisch angegeben. Ist der Türflügel-Rohrbügel gemäß Figur 1, wie bei 12 angedeutet, zweiteilig ausgebildet, so kann der Türflügel auch um die Acryplatte 10 herum zusammengesetzt werden.

In den oberen Türflügelholm 5 sind Anschlagteile 13 und 14 eingeschoben, welche Durchbrüche aufweisen, so daß innerhalb des oberen Türflügelholms 5 eine längslaufende Kammer 15 oberhalb der Schlitzöffnung 8 gebildet ist. Anschlagansätze der Teile 13 und 14 ragen etwas in den Bereich oberhalb der Schlitzöffnung 8 hinein und stützen die Acrylglasplatte 10 gegen die Kraftwirkung der Federmittel 11 nach oben ab.

Innerhalb der längslaufenden Kammer 15 ist in dem oberen Türflügelholm 5 eine stabformige elektrische Lichtquelle 16 installiert, die sich über endständige Fassungen 16 und 17 an der Innenwand des oberen Türflügelholms 5 abstützt.

Elektrische Anschlußleitungen 18 führen aus dem oberen Türflügelholm 5 heraus in das Schwenkrohr 3 und schließlich in das Standrohr 2, wobei zwischen dem Schwenkrohr 3 und dem Standrohr 2 die Schwenkbewegung gestattende flexible Leitungsabschnitte 19 eingebaut sind. Hier können gegebenenfalls auch Schleifringe vorgesehen sein.

Die stabförmige elektrische Lichtquelle 16 hat die Aufgabe, den im oberen Türflügelholm 5 gelegenen Rand 20 der Acrylglasplatte 10 intensiv zu bestrahlen, so daß die Acrylglasplatte 10 als Lichtleiterkörper wirksam werden kann und ein intensiver Lichtstrom aufgrund von innerer Totalreflexion in Richtung auf den unteren Rand 21 der Acrylglasplatte 10 geleitet wird. Dort jedoch, wo eine der Oberflächen der Acrylglasplatte 10 mit einer Ausfräsung 22, beispielsweise in Gestalt einer Beschriftung, versehen ist, wird die innere Totalreflexion innerhalb der Acrylglasplatte 10 gestört und das Licht wird nach außen gestreut, was durch die Pfeile S in Figur 3 deutlich gemacht ist. Anstelle der Ausfräsungen 22 können auch lichtstreuende Mittel auf die betreffende Acrylglasplattenfläche aufgesetzt werden. Weitere Möglichkeiten der Lichtstreuung aus der Platte heraus bestehen in einer Oberflächenaufrauhung, in der Anbringung eines Materialauftrags aus feinen, eine Lichtstreuung bewirkenden Partikeln und in Farbaufträgen.

Die Ausführungsform nach den Figuren 1 und 3 hat im übrigen den Vorteil einer leichten Auswechselbarkeit der Acrylglasplatte 10, was bei Änderung der auf der Acrylglasplattenoberfläche 10 anzubringenden Information von Vorteil ist.

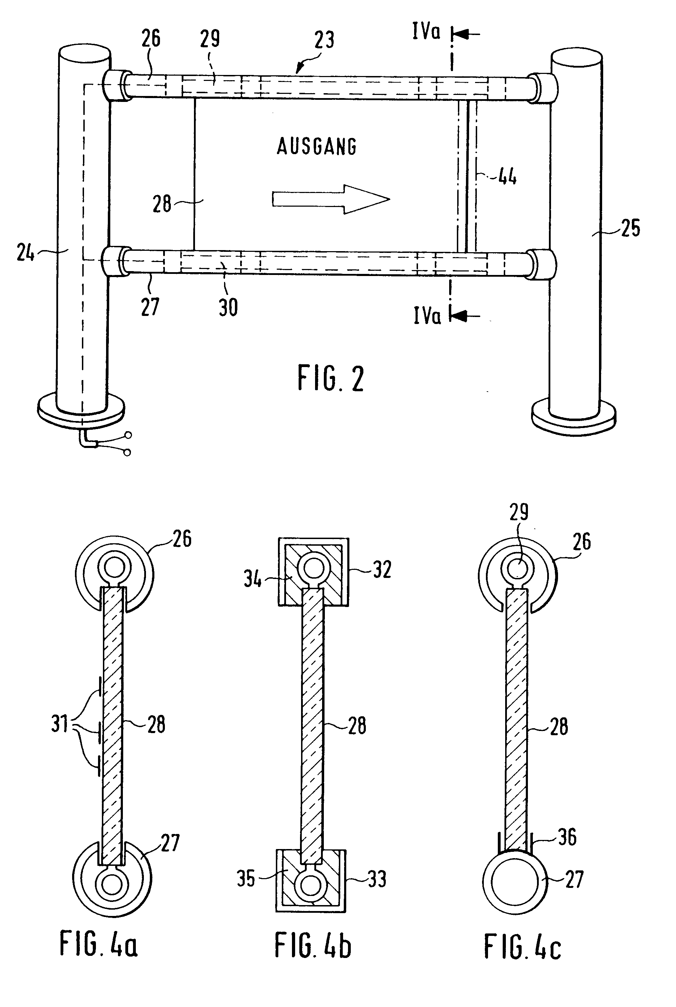

Der in Figur 2 gezeigte Geländerabschnitt 23 enthält zwei im Abstand voneinander am Boden verankerte Geländersäulen 24 und 25 und zwischen diesen im Vertikalabstand voneinander parallel verlaufende horizontale Geländerholme 26 und 27. Zwischen den Geländerholmen ist eine Acrylglasplatte 28 in ähnlicher Weise befestigt, wie dies bei der Ausführungsform nach den Figuren 1 und 3 zuvor für die Acrylglasplatte 10 angegeben worden ist. Während aber bei der Ausführungsform nach Figur 1 nur im oberen Türflügelholm 5 eine stabförmige elektrische Lichtquelle 16 untergebracht ist, befindet sich zusätzlich zu einer stabförmigen elektrischen Lichtquelle 29 im oberen Geländerholm 26 zusätzlich auch im unteren Geländerholm 27 eine weitere stabförmige elektrische Lichtquelle 30, so daß sowohl der obere als auch der untere Rand der Acrylglasplatte 28 mit Licht beaufschlagt wird, das sich durch innere Totalreflexion innerhalb des Plattenkörpers ausbreitet. Im übrigen geschieht die Abstützung der Acrylglasplatte 28 an bzw. in den Geländerholmen 26 und 27 sowie auch die Halterung der Lichtquellen in entsprechender Weise, wie dies für den oberen Teil des Türflügel-Rohrbügels 7 oben im einzelnen beschrieben worden ist.

Auch bei dem Türflügel der Schwenktüre nach Figur 1 können stabförmige elektrische Lichtquellen im oberen und unteren Türflügelholm installiert werden.

Ein Schnitt durch den Geländerabschnitt nach Figur 2 entsprechend der dort angegebenen Schnittlinie IVa-IVa hat etwa die in Figur 4a gezeigte, in etwas vergrößertem Maßstab gezeichnete Form. Man erkennt, daß die Befestigungskonstruktion für die Acrylglasplatte 28 im oberen und unteren Geländerholm 26 bzw. 27 symmetrisch ist. Ein in Gestalt einer Information aufgebrachter Materialauftrag ist in Figur 4a mit 31 bezeichnet und bewirkt eine Lichtstreuung aus der als Lichtleiterkörper wirkenden Acrylglasplatte 28 heraus.

Der Querschnitt der Türflügelholme oder Geländerholme braucht nicht notwendigerweise kreisringförmig zu sein, sondern kann U-förmig ausgebildet sein, wie in Figur 4b dargestellt ist.

In die einander zugekehrten Öffnungen der die Holme 32 und 33 bildenden U-Profile sind Kunststoffleisten 34 bzw. 35 eingesetzt, welche sowohl die Schlitze zur Aufnahme der Ränder der Acrylglasplatte 28 als auch die jeweils hinter den Schlitzen gelegenen und mit ihnen verbundenen längslaufenden Kammern zur Aufnahme der stabförmigen elektrischen Lichtquellen enthalten.

Eine andere Befestigungskonstruktion für die Acrylglasplatte 28 ist schließlich in Figur 4c gezeigt. Während der obere Geländerholm 26 und die darin installierte stabförmige elektrische Lichtquelle 29 ganz entsprechend dem oberen Rand der Acrylglasplatte 28 zugeordnet sind, wie dies bei der Ausführungsform nach den Figuren 2 und 4a zuvor beschrieben wurde, sind an dem unteren Geländerholm 27 Haltelaschen oder Haltestege 36 festgeschweißt, die den unteren Rand der Acrylglasplatte 28 festhalten.

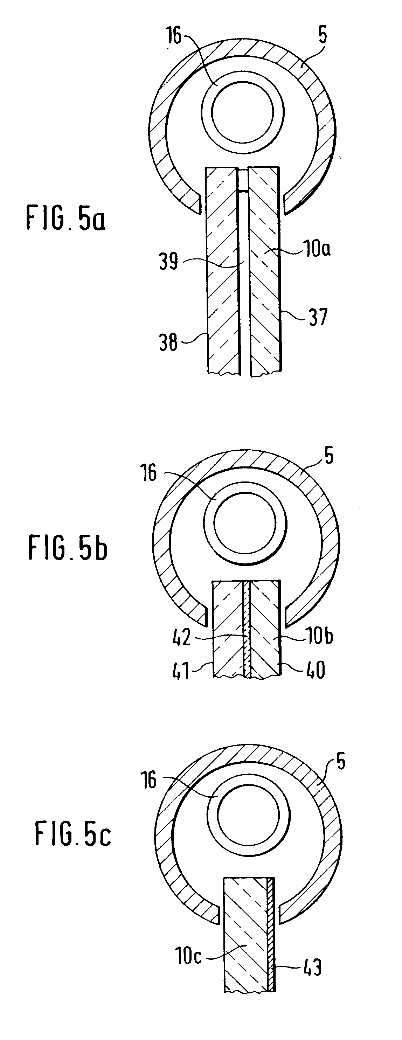

Sollen beide Seiten der als Lichtleiterkörper wirkenden Platte aus transparentem Material mit einer Bild- und/oder Schriftinformation versehen werden, so kann es zweckmäßig sein, die Acrylglasplatte, die in Figur 5a mit 10a bezeichnet ist, aus zwei Schichten 37 und 38 aufzubauen, die durch einen Luftzwischenraum 39 getrennt sind. Die stabförmige elektrische Lichtquelle 16 bestrahlt beide Randkanten der Plattenschichten 37 und 38. Genügt die Trennung der Plattenschichten 37 und 38 über den Luftraum 39 nicht, um das von den lichtstreuenden Mitteln auf einer Plattenoberfläche erzeugte Streulicht entsprechend einer Schriftinformation oder Bildinformation wegen der Transparenz des Plattenmaterials in ausreichendem Maße von der anderen Plattenoberfläche zu isolieren, so daß die auf dieser Plattenoberfläche durch lichtstreuende Mittel erzeugte Bildinformation gestört würde, so kann zwischen die Plattenschichten 40 und 41 gemäß Figur 5b innerhalb der hier mit 10b bezeichneten Platte eine Isolationsschicht 42 eingesetzt werden, welche die innere Totalreflexion innerhalb der Plattenschichten 40 und 41 nicht stört, einen Lichtdurchtritt durch die gesamte Platte 10b aber verhindert.

Figur 5c schließlich zeigt eine Ausführungsform, bei der die hier mit 10c bezeichnete Acrylplatte auf einer Seite mit einer die innere Totalreflexion innerhalb der Platte 10c nicht störenden Beschichtung 43 belegt ist. Die Beschichtung 43 kann außen bedruckt werden. Auf der von der Beschichtung 43 abgewandten Plattenoberfläche kann die Information wiederum durch lichtstreuende Mittel in der zuvor angegebenen Weise verwirklicht werden.

Abschließend sei bemerkt, daß die im Zusammenhang mit den Figuren 4a bis 5c beschriebenen Konstruktionen sowohl auf Schwenktüren als auch auf Geländer anwendbar sind.

In Figur 2 ist außerdem durch strichpunktierte Linien bei 44 noch eine Weiterbildung angedeutet, welche vorsieht, daß zusätzlich oder anstelle der stabförmigen elektrischen Lichtquellen in einem der Holme 26 oder 27 eine stabförmige elektrische Lichtquelle in einem eine Seitenkante der Platte 28 aus transparentem Material umschließenden, die Holme 26 und 27 verbindenden Rohr untergebracht sein kann.

## Patentansprüche

1. Kundenführungsanlage für Selbstbedienungsgeschäfte, Baumärkte, Bahnhöfe, Flughäfen und dergleichen, mit von mindestens einer am Boden verankerbaren Säule (2, 3, 4 bzw. 24,

25) im Vertikalabstand voneinander seitlich wegführenden horizontalen Geländer- oder Türflügelholmen (5, 6 bzw. 26, 27 bzw. 32, 33), dadurch gekennzeichnet,
- daß mindestens einer der Holme (5, 6 bzw. 26, 27 bzw. 32, 33) eine sich zum anderen Holm hin öffnende, in Holmlängsrichtung verlaufende Schlitzöffnung (8, 9) und eine hinter der Schlitzöffnung innerhalb des Holms längs verlaufende Kammer (15) aufweist,
- daß an dem anderen Holm der Schlitzöffnung des ersten Holms gegenüberliegend Platten-Haltemittel (9, 11 bzw. 35 bzw. 36) vorgesehen sind,
- daß an den Platten-Haltemittel einerseits und in der Schlitzöffnung andererseits eine als Lichtleiter wirkende Platte (10 bzw. 28 bzw. 10a, 10b, 10c) aus transparentem Material gehaltert ist, die mindestens auf einer Fläche mit die innere Totalreflexion unterbrechenden, lichtstreuenden Bereichen (22 bzw. 31) versehen ist und
- daß in der längsverlaufenden Kammer (15) des einen Holms eine stabförmige elektrische Lichtquelle (16 bzw. 29, 30) derart angeordnet ist, daß sie die ihr benachbarte Kante (20, 21) der Platte aus transparentem Material bestrahlt und die an Stromzuführungsleitungen (18) angeschlossen ist, welche insbesondere über die Säule in den betreffenden Holm geführt sind.

2. Kundenführungsanlage nach Anspruch 1, dadurch gekennzeichnet, daß die Platten-Haltemittel des anderen Holms (5, 6 bzw. 26, 27) ebenfalls von einer längslaufenden Schlitzöffnung (8, 9) gebildet sind, die sich zum einen Holm hin öffnet und in die eine benachbarte Kante (20, 21) der Platte (10 bzw. 28 bzw. 10a, 10b, 10c) aus transparentem Material eingeschoben ist.

3. Kundenführungsanlage nach Anspruch 2, dadurch gekennzeichnet, daß auch der andere Holm hinter seiner Schlitzöffnung eine Kammer (15) mit stabförmiger elektrischer Lichtquelle (16 bzw. 29, 30) zum Bestrahlen der in die Schlitzöffnung eingeschobenen Kante (20, 21) der Platte aus transparentem Material enthält.

4. Kundenführungsanlage nach einem der Ansprüche 1 bis 3, dadurch gekennzeichnet, daß die Holme (5, 6) Teil eines von einer Schwenktürsäule (2, 3, 4) wegragenden Türflügels (7) einer Schwenktüre (1) bilden und daß die elektrischen Stromzuführungsleitungen (18) von einem stillstehenden Teil (2) der Türe der Schwenktürsäule über Schleifringe oder insbesondere flexible Leitungsabschnitte (19) zu einem drehbaren Teil (3) der Schwenktüre verlaufen.

5. Kundenführungsanlage nach einem der Ansprüche 1 bis 4, dadurch gekennzeichnet, daß die Platte (10a, 10b) aus transparentem Material zwei Schichten (37, 38 bzw. 40, 41) aufweist, die durch eine die innere Totalreflexion in der Platte nicht störende Zwischenschicht (42) oder durch einen Luftzwischenraum (39) getrennt sind.

6. Kundenführungsanlage nach einem der Ansprüche 1 bis 4, dadurch gekennzeichnet, daß die Platte (10c) aus transparentem Material auf einer nicht mit lichtstreuenden Bereichen (22 bzw. 31) versehenen Seite mit einem auf dieser Seite die innere Totalreflexion in der Platte nicht störenden, undurchsichtigen Belag versehen ist.

7. Kundenführungsanlage nach einem der Ansprüche 1 bis 6, dadurch gekennzeichnet, daß die die innere Totalreflexion unterbrechenden, lichtstreuenden Bereiche durch Aufrauhungen oder Einfräsungen der Plattenoberfläche oder durch einen eine Lichtstreuung bewirkenden transparenten Materialauftrag oder Farbauftrag auf der Plattenoberfläche gebildet sind.

8. Kundenführungsanlage nach einem der Ansprüche 1 bis 7, dadurch gekennzeichnet, daß zusätzlich oder anstelle der stabförmigen elektrischen Lichtquelle (16 bzw. 29, 30) in einem der Holme eine stabförmige elektrische Lichtquelle in einem eine Seitenkante der Platte aus transparentem Material umschließenden, die Holme verbindenden Rohr untergebracht ist.
